Europäisches Patentamt

European Patent Office

Office européen des brevets

(19)

(11) Numéro de publication : **0 327 436 B1**

(12) **FASCICULE DE BREVET EUROPEEN**

(45) Date de publication du fascicule du brevet :
**19.08.92 Bulletin 92/34**

(51) Int. Cl.$^5$ : **C03C 17/04, C03C 8/10,
B44C 1/04, B41M 1/34**

(21) Numéro de dépôt : **89400244.3**

(22) Date de dépôt : **27.01.89**

(54) Composition pour émaillage par sérigraphie en quadrichromie d'objets en verre.

(30) Priorité : **05.02.88 FR 8801389**

(43) Date de publication de la demande :
**09.08.89 Bulletin 89/32**

(45) Mention de la délivrance du brevet :
**19.08.92 Bulletin 92/34**

(84) Etats contractants désignés :
**BE DE ES GB IT LU NL**

(56) Documents cités :
**EP-A- 0 166 371
BE-A- 765 711
FR-A- 2 229 553
FR-A- 2 415 087
GB-A- 2 025 929
US-A- 4 420 501**

(56) Documents cités :
**CHEMICAL ABSTRACTS, vol. 97, no. 8, août
1982, page 253, no. 59904d, Columbus, Ohio,
US; & RO-A-67 580 (INSTITUTUL DECERCE-
TARI SI PROIECTARI TECHNOLOGII STICLA
SI CERAMICA FINA) 07-04-1981**

(73) Titulaire : **SOCIETE NOUVELLE
D'APPLICATIONS SERIGRAPHIQUES
2, rue de la Boisnarderie Z.I. de l'Ormeau de
Pied
F-17100 Saintes (FR)**

(72) Inventeur : **Czeczota, Stéphane
15, rue du Puits
F-17100 Saintes (FR)**

(74) Mandataire : **Kremer, Robert A.M. et al
BUREAU D.A. CASALONGA - JOSSE
Morassistrasse 8
W-8000 München 5 (DE)**

## Description

L'invention concerne un procédé de marquage en quadrichromie, par sérigraphie à l'aide d'émaux de la surface d'objets en verre et plus particulièrement de marquage des bouteilles.

L'émaillage d'objets en verre par sérigraphie est connu.

On utilise pour cela des émaux qui se présentent sous forme de particules colorées par exemple, à l'aide d'oxydes métalliques par exemple, ces particules étant utilisées en mélange avec un liant thermofusible ou huileux destiné à en faciliter l'application à travers les typons utilisés pour la sérigraphie.

Après application, l'ensemble est cuit jusqu'à la température de fusion de l'émail. Lors de cette cuisson, le liant s'évapore et les particules se déposent sur le support, fondent et recouvrent le support. Par refroidissement, on obtient une couche continue d'émail adhérant fortement sur le support et présentant les caractéristiques voulues de brillance, dureté, etc...

La température de fusion de l'émail doit être choisie en fonction du support car elle doit être suffisamment basse pour qu'à la température de fusion de l'émail, le support ne se détériore pas sous l'action de contraintes thermiques. C'est ainsi que pour le verre, les émaux utilisés ont une température de fusion de 580°C environ, alors que pour les céramiques, un émail fondant entre 650 et 850°C peut être utilisé.

De tels émaux destinés à être utilisés pour l'émaillage du verre sont applicables par sérigraphie.

Dans ce procédé, on dispose successivement des couches d'émail ayant une couleur déterminée en faisant passer l'émail et le liant fondu à travers un écran maillé en inox.

On a constaté que les couches d'émail appliquées successivement ne s'interpénètrent pas. C'est ainsi qu'appliquer une couche d'émail bleu sur un émail jaune ne donne pas un émail vert, mais que seule la dernière couche appliquée, dans ce cas le bleu, est visible.

Pour avoir un résultat laissant apparaitre des couleurs nuancées, il est donc nécessaire de multiplier le nombre de couleurs à appliquer, et donc le nombre d'écrans et le nombre de passes.

Pour remédier à cet inconvénient, la présente invention a pour but de fournir un produit permettant d'obtenir un résultat excellent, c'est-à-dire composé de toutes les nuances voulues par l'application d'un fond blanc et de quatre couleurs de base comme cela est pratiqué en imprimerie sur papier selon le procédé dit de quadrichromie.

Le brevet US A 4.720.501 a pour objet la formation d'une couche de revêtement électriquement conductrice et colorée sur une feuille de verre en appliquant un pigment organique et/ou une poudre métallique en association avec une fritte de verre et un liant liquide organique.

Le brevet BE-A 76 5711 est relatif à la coloration de verre par un procédé différent de la quadrichromie.

La demande FR-A 2.229.553 a pour objet l'impression de pièces céramiques au moyen de la sérigraphie.

Ce document prévoit une impression à 4 couleurs et non pas en quadrichromie.

L'invention a pour objet un procédé de marquage par sérigraphie d'objets en verre à l'aide d'émaux, le marquage étant réalisé en quadrichromie selon un procédé consistant à :

– préparer quatre écrans destinés à l'impression par sérigraphie en quadrichromie, chacun correspondant respectivement à une des couleurs de base de la quadrichromie : magenta, jaune, cyan et noir; ces écrans comportant un motif réalisé par insolation d'une solution photographique à travers un typon, obstruant l'émail de l'écran correspondant aux parties de la bouteille qui ne doit pas recevoir la couleur de base à appliquer à travers l'écran en cause,

– déposer sur les quatre écrans ainsi préparés respectivement l'une des quatre compositions d'émail coloré correspondant aux couleurs primaires magenta, jaune, cyan et noir, la composition d'émail coloré pour la couleur magenta comprenant un émail rouge et un agent de transparence, la composition d'émail coloré pour la couleur jaune comprenant un émail jaune et un agent de transparence, la composition d'émail coloré pour la couleur cyan comprenant un émail bleu et un agent de transparence et la composition d'émail coloré pour la couleur noire comprenant un émail noir et un agent de transparence,

– appliquer de façon successive chacune des compositions d'émail coloré, chauffées à une température leur conférant une viscosité appropriée pour traverser les mailles libre de l'écran respectif et recouvrir la surface correspondante de la bouteille selon un ordre des couleurs magenta, jaune, cyan et noir permettant la réalisation du motif en quadrichromie envisagé à l'aide d'une machine à sérigraphier,

– chauffer les objets en verre ainsi recouverts à une température permettant de réaliser par cuisson, un émaillage en quadrichromie sur l'objet en verre.

Selon d'autres caractéristiques :

– le flux transparent ou agent de transparence consiste en boro-silicate de plomb cadmifère;

– la composition comporte entre 200 et 400 g d'émail rouge et environ 1000 g d'agent de transparence;

– la composition comporte entre 200 et 400 g d'émail jaune et environ 1000 g d'agent de transparence;

– la composition comporte entre 200 et 400 g d'émail bleu et environ 1000 g d'agent de transparence;

– la composition comporte entre 0 et 500 g d'émail noir et environ 1000 g d'agent de transparence.

La présente invention sera mieux comprise à l'aide de la description qui va suivre. On décrira plus particulièrement la mise en oeuvre du procédé selon l'invention pour le marquage d'une bouteille, cette mise en oeuvre étant donnée uniquement à titre d'exemple.

Les compositions à base d'émaux c'est-à-dire un émail blanc et quatre produits primaires peuvent être utilisées dans une machine à sérigraphier pour marquage de produits de révolution par exemple cylindriques et elliptiques telle que fournie par exemple sous la référence 157 par les établissements DUBUIT à NOISY LE GRAND (FRANCE). Une telle machine est du type à six couleurs automatiques, c'est-à-dire qu'elle peut réaliser six couches de couleurs différentes de manière successive et automatique.

L'application des couleurs se fait à travers des écrans de toile inox dont la maille est par exemple de 32 mm. Ces écrans sont tendus sur des cadres en bois et la toile dépasse de 5 à 6 cm à chaque bord pour permettre la fixation d'électrodes de chauffage.

Pour que l'application soit correcte, les écrans sont préparés avant leur introduction dans la machine, c'est-à-dire recouverts d'une solution photographique qui par insolation à travers un typon va obstruer les mailles de l'écran qui vont recouvrir la partie de la bouteille à ne pas colorer avec la composition selon l'invention correspondant au typon.

Pour obtenir un produit adapté pour l'application par exemple sur une bouteille, comme indiquée précédemment, il est nécessaire d'utiliser un produit dont la viscosité sera adaptée aux mailles de l'écran à une température relativement basse pour que le refroidissement donc le durcissement soit très rapide pour l'application de la couleur primaire suivante. Par ailleurs, le produit devra être transparent après cuisson à 580°C environ.

On utilise donc quatre produits appelés primaires qui seront appliqués sur un fond blanc.

Les quatre produits primaires selon l'invention sont obtenus par mélange d'un émail coloré et d'un agent de transparence.

Pour réaliser les produits primaires, on a utilisé à titre d'exemple des produits vendus par les ETABLISSEMENTS DEGUSSA à LIMOGES (FRANCE) :

– produit primaire Magenta :
  . 200 à 400 g d'émail rouge pour verre référence VR 272
  . 1 000 g d'agent de transparence qui est, selon l'invention, du borosilicate de plomb-cadmifère vendu sous la référence C 50-70;

– produit primaire Jaune :
  . 200 à 400 g d'émail jaune référence VS 68-59

  . 1 000 g d'agent de transparence C 50-70
– produit primaire Cyan :
  . 300 à 500 g d'émail bleu référence VS 335
  . 1 000 g d'agent de transparence C 50-70
– produit primaire Noir :
  . de 0 à 400 g d'émail noir référence VS 384
  . 1 000 g d'agent de transparence C 50-70.

Il est à noter que la proportion d'émail noir contenu dans le produit primaire Noir varie en fonction du rendu que l'on désire obtenir, c'est-à-dire de l'aspect final désiré.

Il en est de même pour les autre produits mais pour ceux-ci, on a pu constater de bons résultats avec de préférence pour 1 000 g d'agent de transparence C 50-70 300 g d'émail rouge pour le produit primaire Magenta, 300 g d'émail jaune pour le produit primaire Jaune et 400 g d'émail bleu pour le produit primaire Cyan.

Chacun de ces produits primaires est alors réduit en poudre dont les particules ont une dimension comprise entre 5 et 12 m. Cette poudre est mélangée avec un médium huileux si les écrans sont en polyester et dans un liant thermofusible si l'écran est une toile en inox.

Ayant préparé ces produits, on procède de la façon suivante :

– au-dessus d'un écran préparé comme indiqué ci-dessus, on déverse de l'émail blanc (référence VR 290 par exemple) et on positionne cet ensemble dans le logement prévu pour la première application par la machine;
– on recouvre de produit primaire Magenta l'écran correspondant au typon Magenta et on le positionne pour l'application suivant la réalisation du fond blanc;
– on fait de même avec les produits primaires jaune, cyan et noir qui seront appliqués successivement dans cet ordre par la machine.

Chaque écran étant relié à des électrodes chauffantes est chauffé jusqu'à 80°C, ce qui fournira un produit de viscosité adapté pour traverser les mailles libres de l'écran et recouvrir la surface correspondante de la bouteille.

Par applications successives sur un fond blanc des quatre produits primaires selon l'invention, après passage dans un four de cuisson à 580°C, on obtient un décor émaillé présentant toutes les nuances désirées, du fait de la présence de l'agent de transparence.

De plus, ces applications étant réalisées à l'aide d'une machine à sérigraphier en automatique, le marquage ne nécessite aucune manipulation en dehors du transfert au four de cuisson.

Les produits selon l'invention permettent donc de réaliser un émaillage d'objets en verre dont l'aspect est amélioré et correspond à celui obtenu par sérigraphie en quadrichromie sur papiers blancs. Le nombre réduit d'applications diminue le coût de l'émaillage car il diminue les manipulations et la durée d'utilisation de la machine à sérigraphier.

**Revendications**

1. Procédé de marquage par sérigraphie d'objets en verre à l'aide d'émaux, caractérisé par le fait que l'on réalise un marquage en quadrichromie selon un procédé consistant à :
– préparer quatre écrans destinés à l'impression par sérigraphie en quadrichromie, chacun correspondant respectivement à une des couleurs de base de la quadrichromie : magenta, jaune, cyan et noir; ces écrans comportant un motif réalisé par insolation d'une solution photographique à travers un typon, obstruant l'émail de l'écran correspondant aux parties de la bouteille qui ne doit pas recevoir la couleur de base à appliquer à travers l'écran en cause,
– déposer sur les quatre écrans ainsi préparés respectivement l'une des quatre compositions d'émail coloré correspondant aux couleurs primaires magenta, jaune, cyan et noir, la composition d'émail coloré pour la couleur magenta comprenant un émail rouge et un agent de transparence, la composition d'émail coloré pour la couleur jaune comprenant un émail jaune et un agent de transparence, la composition d'émail coloré pour la couleur cyan comprenant un émail bleu et un agent de transparence et la composition d'émail coloré pour la couleur noire comprenant un émail noir et un agent de transparence,
– appliquer de façon successive chacune des compositions d'émail coloré, chauffées à une température leur conférant une viscosité appropriée pour traverser les mailles libre de l'écran respectif et recouvrir la surface correspondante de la bouteille selon un ordre des couleurs magenta, jaune, cyan et noir permettant la réalisation du motif en quadrichromie envisagé à l'aide d'une machine à sérigraphier,
– chauffer les objets en verre ainsi recouverts à une température permettant de réaliser par cuisson, un émaillage en quadrichromie sur l'objet en verre.

2. Procédé selon la revendication 1, caractérisé par le fait que l'agent de transparence consiste en du boro-silicate de plomb cadmifère.

3. Procédé selon la revendication 1 ou 2, caractérisé en ce que la composition d'émail coloré pour la couleur magenta est obtenue par mélange d'environ 20 à 40 parties d'émail rouge (Magenta) pour 100 parties d'agent de transparence.

4. Procédé selon la revendication 1 ou 2, caractérisé en ce que la composition d'émail coloré jaune et obtenue par mélange d'environ 20 à 40 parties d'émail jaune pour pour 100 parties d'agent de transparence.

5. Procédé selon la revendication 1 ou 2, caractérisé en ce que la composition d'émail coloré cyan est obtenue par mélange d'environ 30 à 50 parties d'émail bleu (Cyan) pour 100 parties d'agent de transparence.

6. Procédé selon la revendication 1 ou 2, caractérisé en ce que la composition d'émail coloré noir est obtenue par mélange d'environ 1 à 50 parties d'émail noir pour 100 parties d'agent de transparence.

7. Procédé selon l'une quelconque des revendications 1 à 6, caractérisé par le fait qu'il comporte en outre l'application d'un fond en émail thermofusible blanc sur la surface de l'objet destiné à être marqué, avant de sérigraphier en quadrichromie.

8. Procédé de marquage selon l'une quelconque des revendications 1 à 7, caractérisé par le fait que l'écran mis en oeuvre est un écran en toile en métal inoxydable.

9. Procédé selon l'une quelconque des revendications 1 à 8, caractérisé par le fait que les compositions d'émail contiennent un liant thermofusible.

10. Procédé selon l'une quelconque des revendications 1 à 9, caractérisé par le fait qu'on effectue la cuisson à une température de 580°c environ.

11. Objet en verre caractérisé par le fait qu'il comporte un émaillage en quadrichromie réalisé par la mise en oeuvre du procédé défini dans l'une quelconque des revendications 1 à 10.

**Patentansprüche**

1. Verfahren zum Bedrucken von Glasgegenständen mit Emails mittels Siebdruck, dadurch gekennzeichnet, daß man ein quadrochromatisches Druckverfahren durchführt, das darin besteht, daß man
– vier zum Bedrucken mittels quadrochromatischen Siebdrucks bestimmte Schablonen herstellt, von denen eine jeweils einer der quadrochromatischen Grundfarben, Magenta, Gelb, Zyan und Schwarz, entspricht, wobei diese Schablonen ein Motiv aufweisen, das durch Sonneneinwirkung auf eine photographische Lösung durch eine Druckvorlage hindurch erhalten worden ist, die das Email der Schablone verdeckt, das den Teilen der Flasche entspricht, die die durch die betreffende Schablone hindurch aufzutragende Grundfarbe nicht erhalten sollen,
– auf den vier so hergestellten Schablonen jeweils eine der vier den Primärfarben Magenta, Gelb, Zyan und Schwarz entsprechenden Zusammensetzungen aus Farbemail abscheidet, wobei die Zusammensetzung aus Farbemail für die Farbe Magenta ein rotes Email sowie ein Transparenzmittel, die Zusammensetzung aus Farbemail für die Farbe Alb ein gelbes Email so-

4

wie ein Transparenzmittel, die Zusammensetzung aus Farbemail für die Farbe Zyan ein blaues Email sowie ein Transparenzmittel und die Zusammensetzung aus Farbemail für die Farbe Schwarz ein schwarzes Email sowie ein Transparenzmittel enthalten,

– jede der Zusammensetzungen aus Farbemail nacheinander aufträgt, und zwar nach Erhitzen auf eine Temperatur, die ihnen eine zum Durchdringen der freien Maschen der jeweiligen Schablone und Bedecken der jeweiligen Flaschenoberfläche gemäß der Reihenfolge der Farben Magenta, Alb, Zyan und Schwarz geeignete Viskosität verleiht, wodurch sich das vorgesehene Motiv mit Hilfe einer Siebdruckmaschine im Quadrochromiedruck auftragen läßt,

– die so beschichteten Glasgegenstände auf eine Temperatur erhitzt, die es ermöglicht, auf dem Glasgegenstand eine quadrochromatische Glasur mittels Brennen aufzutragen.

2. Verfahren nach Anspruch 1, dadurch gekennzeichnet, daß das Transparenzmittel aus cadmiumhaltigem Bleiborsilikat besteht.

3. Verfahren nach Anspruch 1 oder 2, dadurch gekennzeichnet, daß die Zusammensetzung aus Farbemail für die Farbe Magenta durch Vermischen von ungefähr 20 bis 40 Teilen rotem Email (Magenta) pro 100 Teile Transparenzmittel erhalten wird.

4. Verfahren nach Anspruch 1 oder 2, dadurch gekennzeichnet, daß die Zusammensetzung aus gelbem Farbemail durch Vermischen von ungefähr 20 bis 40 Teilen gelbem Email pro 100 Teile Transparenzmittel erhalten wird.

5. Verfahren nach Anspruch 1 oder 2, dadurch gekennzeichnet, daß die Zusammensetzung aus Zyan-Farbemail durch Vermischen von ungefähr 30 bis 50 Teilen blauem Email (Zyan) pro 100 Teile Transparenzmittel erhalten wird.

6. Verfahren nach Anspruch 1 oder 2, dadurch gekennzeichnet, daß die Zusammensetzung aus schwarzem Farbemail durch Vermischen von ungefähr 1 bis 50 Teilen schwarzem Email pro 100 Teile Transparenzmittel erhalten wird.

7. Verfahren nach einem der Ansprüche 1 bis 6, dadurch gekennzeichnet, daß es weiterhin darin besteht, daß man einen Untergrund aus weißem heiß schmelzbarem Email auf die Oberfläche des zu bedruckenden Agenstandes vor dem quadrochromatischen Siebdruckverfahren aufbringt.

8. Bedruckungsverfahren nach einem der Ansprüche 1 bis 7, dadurch gekennzeichnet, daß es sich bei der Schablone um eine Schablone aus nichtoxidierbarem Drahtgewebe handelt.

9. Verfahren nach einem der Ansprüche 1 bis 8, dadurch gekennzeichnet, daß die Email zusammensetzungen ein heißschmelzbares Bindemittel enthalten.

10. Verfahren nach einem der Ansprüche 1 bis 9, dadurch gekennzeichnet, daß das Brennen bei einer Temperatur von etwa 580°C erfolgt.

11. Glasgegenstand, dadurch gekennzeichnet, daß er eine quadrochromatische Glasur aufweist, die durch Durchführung des in einem der Ansprüche 1 bis 10 definierten Verfahrens erhalten wird.

## Claims

1. Process for marking, using a screen printing process, glass articles with the aid of glazes, characterised in that a four-colour marking is produced by a process consisting in:

– preparing four screens intended for four-colour screen printing, each corresponding to one of the basic colours of the four-colour process: magenta, yellow, cyan and black, respectively; these screens comprising a design produced by exposing a photographic solution to light through a typon, blocking off the glaze from the screen corresponding to the parts of the bottle which are not to receive the basic colour to be applied through the screen in question,

– depositing onto the four screens thus prepared, respectively, one of the four coloured glaze compositions corresponding to the primary colours magenta, yellow, cyan and black, the coloured glaze composition for the magenta colour comprising a red glaze and a transparency agent, the coloured glaze composition for the yellow colour comprising a yellow glaze and a transparency agent, the coloured glaze composition for the cyan colour comprising a blue glaze and a transparency agent and the coloured glaze composition for the black colour comprising a black glaze and a transparency agent,

– applying successively each of the coloured glaze compositions which are heated to a temperature giving them a suitable viscosity for passing through the free meshes of the respective screen and covering the corresponding area of the bottle according to an order of the colours magenta, yellow, cyan and black thus permitting the intended four-colour pattern to be produced with the aid of a screen-printing machine,

– heating the glass articles thus coated to a temperature permitting a four-colour glaze to be produced on the glass article by baking.

2. Process according to Claim 1, characterised in that the transparency agent consists of cadmium-bearing lead borosilicate.

3. Process according to Claim 1 or 2, characterised in that the magenta-coloured glaze composition is obtained by mixing approximately 20 to 40 parts of red (magenta) glaze per 100 parts of transparency agent.

4. Process according to Claim 1 or 2, characterised in that the yellow-coloured glaze composition is obtained by mixing approximately 20 to 40 parts of yellow glaze per 100 parts of transparency agent.

5. Process according to Claim 1 or 2, characterised in that the cyan-coloured glaze composition is obtained by mixing approximately 30 to 50 parts of blue (cyan) glaze per 100 parts of transparency agent.

6. Process according to Claim 1 or 2, characterised in that the black-coloured glaze composition is obtained by mixing approximately 1 to 50 parts of black glaze per 100 parts of transparency agent.

7. Process according to any one of Claims 1 to 6, characterised in that it additionally comprises the application of a background made of white thermofusible glaze onto the surface of the article intended to be marked, before the four-colour screen printing.

8. Process for marking according to any one of Claims 1 to 7, characterised in that the screen used is a screen made of stainless metal cloth.

9. Process according to any one of Claims 1 to 8, characterised in that the glaze compositions contain a thermofusible binder.

10. Process according to any one of Claims 1 to 9, characterised in that the baking is performed at a temperature of approximately 580°C.

11. Glass article characterised in that it comprises a four-colour glaze produced by using the process defined in any one of Claims 1 to 10.